# EUROPEAN PATENT APPLICATION

(11) **EP 4 835 284 A1**
(43) Date of publication of application: **04.11.2026**
(21) Application number: 26169323.8
(22) Date of filing: 30.03.2026
(51) Int. Cl.: F02M 31/04, F02D 19/06, F02D 41/00, F02M 31/20, F02M 43/00

(54) **ENGINE SYSTEM**

(30) Priority: 02.05.2025 JP 2025076708
(71) Applicant: Yanmar Holdings Co., Ltd., Osaka (JP)
(72) Inventor: MORIMITSU, Daisuke, Osaka-shi (JP); FUJISAKI, Keita, Osaka-shi (JP); MATSURA, Yoshimitsu, Osaka-shi (JP); TOSHINAGA, Kazuteru, Osaka-shi (JP); MATSUNAGA, Daichi, Osaka-shi (JP); MIMOTO, Rentaro, Osaka-shi (JP); SATO, Yoshiyuki, Osaka-shi (JP); HAMAOKA, Shunji, Osaka-shi (JP)
(74) Representative: Sekiguchi, Kazuya

(57) **Abstract**

An engine system capable of improving combustion efficiency of an engine by adjusting intake air to an appropriate intake air temperature at the time of supplying at least one of two or more types of fuel to the engine is provided.

An engine system 1 is an engine system 1 that operates by combusting at least one of two or more types of fuel including alcohol-based fuel such as methanol and hydrocarbon-based fuel such as diesel fuel, and includes an intake air temperature adjusting unit capable of adjusting an intake air temperature of intake air of an intake passage 3 based on a supply ratio of the two or more types of fuel.

## Description

### TECHNICAL FIELD

The present invention relates to an engine system that operates by combusting at least one of two or more types of fuel.

### BACKGROUND ART

Conventionally, there is known an engine system that operates by supplying alcohol-based fuel such as methanol to an engine (internal combustion engine) and combusting the fuel.

For example, in the marine vessel disclosed in Patent Document 1, a diesel engine that can be operated using methanol as fuel is used as a main engine so that, as compared with a case in which liquefied natural gas is used as the fuel, sulfur oxides, particulate matter, and nitrogen oxides in exhaust gas can be significantly reduced, and further carbon dioxide emissions can be reduced.

Further, in the engine system, there is what is called a dual fuel engine that operates by supplying at least one of two or more types of fuel including alcohol-based fuel such as methanol and hydrocarbon-based fuel such as diesel fuel to the engine and combusting the fuel.

### PRIOR ART DOCUMENT

### PATENT DOCUMENT

Patent Document 1: JP2015-221645 A

### SUMMARY OF INVENTION

### TECHNICAL PROBLEM

However, in an engine system that injects alcohol-based fuel such as methanol into an intake passage, there is a possibility that the fuel cannot be mixed with air when the fuel is not sufficiently gasified, and further the fuel may adhere as liquid to a wall surface of the intake passage, and hence it is required to promote gasification by increasing an intake air temperature. Meanwhile, in an engine system that injects hydrocarbon-based fuel such as diesel fuel directly into a combustion chamber, it is desired that the intake air temperature be lower to increase a compression ratio.

Accordingly, in a dual fuel engine that supplies at least one of two or more types of fuel including alcohol-based fuel and hydrocarbon-based fuel to the engine, it is required to adjust the intake air temperature optimal for each fuel because the combustion characteristics of the fuels are different from each other.

An object of the present invention is to provide an engine system capable of improving combustion efficiency of an engine by adjusting intake air to an appropriate intake air temperature at the time of supplying at least one of two or more types of fuel to the engine.

### SOLUTION TO PROBLEM

In order to solve the above-mentioned problem, an engine system of the present invention is an engine system that operates by combusting at least one of two or more types of fuel, the engine system including an intake air temperature adjusting unit capable of adjusting an intake air temperature of intake air based on a supply ratio of the two or more types of fuel.

### ADVANTAGEOUS EFFECTS OF INVENTION

The present invention provides the engine system capable of improving the combustion efficiency of the engine by adjusting the intake air to an appropriate intake air temperature at the time of supplying at least one of two or more types of fuel to the engine.

### BRIEF DESCRIPTION OF DRAWINGS

FIG. 1 is a schematic view illustrating an example of an engine system according to an embodiment of the present invention;
FIG. 2 is a schematic view illustrating a first modification example of the engine system according to the embodiment of the present invention;
FIG. 3 is a schematic view illustrating a second modification example of the engine system according to the embodiment of the present invention; and
FIG. 4 is a schematic view illustrating a third modification example of the engine system according to the embodiment of the present invention.

### DESCRIPTION OF EMBODIMENTS

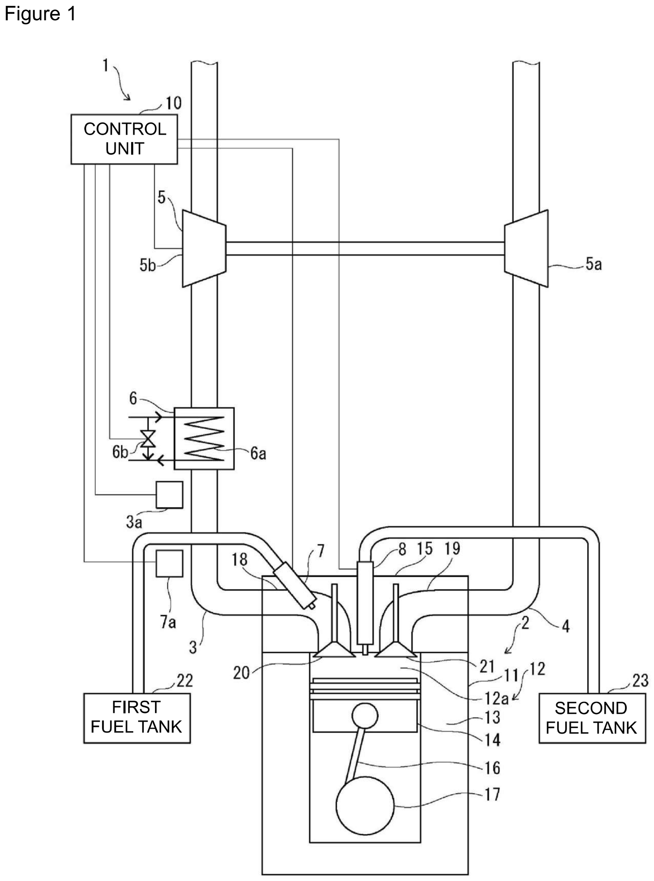

An engine system 1 according to an embodiment of the present invention will be described with reference to the drawings. As illustrated in FIG. 1, the engine system 1 includes an engine 2, an intake passage 3, an exhaust passage 4, a supercharger 5, a heat exchanging unit 6 (intake air temperature adjusting unit), a first fuel supply unit 7, a second fuel supply unit 8, and a control unit 10.

Particularly in the present embodiment, in the engine system 1, at least one of two or more types of fuel having different combustion characteristics including alcohol-based fuel such as methanol and hydrocarbon-based fuel such as diesel fuel is supplied to the engine 2 that is an internal combustion engine, and the fuel is combusted for operation. The engine 2 is a dual fuel engine that can operate with air including the alcohol-based fuel and the hydrocarbon-based fuel.

The engine system 1 operates in any operation mode among a gas mode in which the engine system 1 operates by supplying only the alcohol-based fuel to the engine 2, a diesel mode in which the engine system 1 operates by supplying only the hydrocarbon-based fuel to the engine 2, and a mixed combustion mode in which the engine system 1 operates by supplying both of the alcohol-based fuel and the hydrocarbon-based fuel with a predetermined supply ratio to the engine 2. It is to be noted that, in the case of the mixed combustion mode, the engine system 1 can set the supply ratio of the alcohol-based fuel to the hydrocarbon-based fuel (for example, 40% mode, 50% mode, 60% mode, or the like).

The engine 2 is configured to include a plurality of cylinder units 12 in a cylinder block 11, but, in FIG. 1 to FIG. 3, only one cylinder unit 12 is illustrated. Each cylinder unit 12 is configured of a cylinder 13, a piston 14, and a cylinder head 15.

For example, the cylinder 13 is formed into a tubular shape in the cylinder block 11, and the piston 14 is housed slidable in the cylinder 13. The cylinder head 15 is attached to the upper side of the cylinder 13, and the cylinder 13 and the cylinder head 15 form a combustion chamber 12a on the inner side.

Below the cylinder 13, a crankshaft 17 is coupled to the piston 14 via a connecting rod 16 to convert a reciprocating motion of the piston 14 to a rotational motion of the crankshaft 17 via the connecting rod 16.

Further, the cylinder head 15 includes an intake port 18 and an exhaust port 19 communicating with the combustion chamber 12a of the cylinder 13, and includes an intake valve 20 and an exhaust valve 21 that open and close the intake port 18 and the exhaust port 19, respectively, with respect to the combustion chamber 12a.

The intake port 18 is connected to the intake passage 3, and introduces air (intake air) supplied from the intake passage 3 toward the engine 2 to the combustion chamber 12a. The exhaust port 19 is connected to the exhaust passage 4, and discharges exhaust gas generated in the combustion chamber 12a to the exhaust passage 4. With the intake valve 20 being opened, a mixture of a fuel gas and air (in the case of the mixed combustion mode) or air (in the case of the diesel mode) can be sucked to the combustion chamber 12a through the intake port 18. Meanwhile, with the exhaust valve 21 being opened, exhaust gas generated in the combustion chamber 12a can be discharged through the exhaust port 19.

The intake passage 3 allows air to flow therethrough in an intake direction to supply the air to each cylinder unit 12 through the intake port 18 of each cylinder unit 12 of the engine 2. The exhaust passage 4 allows exhaust gas generated in each cylinder unit 12 of the engine 2 and discharged through the exhaust port 19 to flow in an exhaust direction to discharge the exhaust gas.

On the intake passage 3, in order from the upstream side in the intake direction, the supercharger 5 and the heat exchanging unit 6 are provided. It is to be noted that, at an upstream end of the intake passage 3 in the intake direction, an air filter (not shown) that purifies and introduces fresh air may be provided. On the intake passage 3, an intake air temperature acquiring unit 3a that acquires the intake air temperature of the intake air is provided. The intake air temperature acquiring unit 3a is configured of, for example, a temperature sensor that detects an internal temperature or an external temperature of the intake passage 3, and is disposed on the downstream side from the heat exchanging unit 6 in the intake direction. It is to be noted that the intake air temperature acquiring unit 3a may be installed in the atmosphere in the vicinity of the engine system 1.

The supercharger 5 compresses the air (intake air) flowing through the intake passage 3 toward the engine 2, and sends out the compressed air to the downstream side in the intake direction. The supercharger 5 includes a turbine 5a and a compressor 5b. The turbine 5a is disposed on the exhaust passage 4, and the compressor 5b is disposed on the intake passage 3. The turbine 5a is rotated by the exhaust gas flowing through the exhaust passage 4, and the compressor 5b is driven by the rotational force of the turbine 5a to compress the air flowing through the intake passage 3.

The heat exchanging unit 6 is an intake air temperature adjusting unit that adjusts the intake air temperature of intake air by heat exchange between the intake air and a heat exchange medium. The heat exchanging unit 6 includes a heat exchange medium passage 6a through which the heat exchange medium flows, and a medium flow rate adjusting unit 6b that adjusts a medium flow rate of the heat exchange medium in the heat exchange medium passage 6a. Under the control of the control unit 10, the heat exchanging unit 6 adjusts the medium flow rate of the heat exchange medium by the medium flow rate adjusting unit 6b, thereby controlling the degree of heat exchange between the intake air and the heat exchange medium to adjust the intake air temperature of the intake air.

For example, the heat exchanging unit 6 is configured of an intercooler that cools the intake air compressed by the supercharger 5 by a cooling medium. Alternatively, the heat exchanging unit 6 may be configured of a heater that heats the intake air compressed by the supercharger 5 by a heating medium, or may be configured to heat or cool the intake air compressed by the supercharger 5 by sent air.

The first fuel supply unit 7 supplies alcohol-based fuel such as methanol supplied from a first fuel tank 22 that stores the alcohol-based fuel as first fuel toward the combustion chamber 12a of each cylinder unit 12 of the engine 2.

For example, the first fuel supply unit 7 is configured of a methanol supply device (LFSS) that performs pressure supply, a fuel valve train (FVT) that performs fuel supply/cutoff to the engine, or the like, in a first fuel supply passage for supplying the alcohol-based fuel from the first fuel tank 22. The first fuel supply unit 7 injects the alcohol-based fuel to the intake air, and is controlled by the control unit 10 in injection amount, injection timing, or the like of the alcohol-based fuel. It is to be noted that an injection pressure of the alcohol-based fuel conforms to a supply pressure in the first fuel supply passage from the first fuel tank 22, and the supply pressure may be adjusted by the methanol supply device.

FIG. 1 illustrates an example in which the first fuel supply unit 7 is provided at the intake port 18 to inject the alcohol-based fuel into the intake port 18, and thus the alcohol-based fuel is supplied to the combustion chamber 12a through the intake port 18. Alternatively, the first fuel supply unit 7 may be provided in the intake passage 3 to inject the alcohol-based fuel into the intake passage 3 and supply the alcohol-based fuel to the combustion chamber 12a through the intake passage 3 and the intake port 18, or the first fuel supply unit 7 may be provided in the cylinder 13 or the cylinder head 15 to supply the alcohol-based fuel by directly injecting it into the combustion chamber 12a.

It is to be noted that the engine system 1 includes an injection pressure acquiring unit 7a that acquires the injection pressure of the alcohol-based fuel injected by the first fuel supply unit 7. For example, the injection pressure acquiring unit 7a is configured of a pressure sensor provided in the methanol supply device in a first fuel supply tube for supplying the alcohol-based fuel from the first fuel tank 22.

The second fuel supply unit 8 supplies hydrocarbon-based fuel such as diesel fuel supplied from a second fuel tank 23 that stores the hydrocarbon-based fuel as second fuel toward the combustion chamber 12a of each cylinder unit 12 of the engine 2.

For example, the second fuel supply unit 8 is configured of a device such as a micro-pilot injector that injects a small amount of hydrocarbon-based fuel. The second fuel supply unit 8 subjects mixed air of alcohol-based fuel and air (in the case of the mixed combustion mode) or air (diesel mode) in the combustion chamber 12a to compression self-ignition by the hydrocarbon-based fuel to combust the fuel. The second fuel supply unit 8 is controlled by the control unit 10 in injection amount, injection timing, or the like of the hydrocarbon-based fuel. It is to be noted that an injection pressure of the hydrocarbon-based fuel conforms to the supply pressure from the second fuel tank 23 to the second fuel supply unit 8.

FIG. 1 illustrates an example in which the second fuel supply unit 8 is provided in the cylinder head 15, and supplies the hydrocarbon-based fuel by directly injecting it into the combustion chamber 12a. Alternatively, the second fuel supply unit 8 may be provided in the intake port 18 and inject the hydrocarbon-based fuel into the intake port 18 to supply the hydrocarbon-based fuel to the combustion chamber 12a through the intake port 18, or the second fuel supply unit 8 may be provided in the intake passage 3 and inject the hydrocarbon-based fuel into the intake passage 3 to supply the hydrocarbon-based fuel to the combustion chamber 12a through the intake passage 3 and the intake port 18.

The control unit 10 is a computer such as an ECU (Engine Control Unit) that controls the operation of the engine system 1, and includes a CPU, a ROM, a RAM, and the like and is configured to control each unit of the engine system 1. The control unit 10 may store various programs for controlling the engine system 1, and read and execute a program to control the engine system 1.

Next, basic supply control of the alcohol-based fuel and the hydrocarbon-based fuel in the engine system 1 will be described.

The control unit 10 switches the operation mode to any one of the gas mode, the diesel mode, and the mixed combustion mode automatically in accordance with a load of the engine 2 or the like or in accordance with an operation performed by a user.

For example, in the case of the gas mode, the control unit 10 sets the supply ratio of the alcohol-based fuel to the hydrocarbon-based fuel as 100% and performs control to supply the alcohol-based fuel to the combustion chamber 12a by the first fuel supply unit 7. At this time, when the hydrocarbon-based fuel is used as an igniter in the combustion chamber 12a, the control unit 10 may perform control to supply a small amount of hydrocarbon-based fuel to the combustion chamber 12a by the second fuel supply unit 8 to set the supply ratio of the alcohol-based fuel as substantially 100%. Alternatively, when ignition is performed in the combustion chamber 12a without using the hydrocarbon-based fuel, the control unit 10 may set the supply ratio of the alcohol-based fuel as 100% without supplying the hydrocarbon-based fuel by the second fuel supply unit 8.

Further, in the case of the diesel mode, the control unit 10 sets the supply ratio of the alcohol-based fuel to the hydrocarbon-based fuel as 0%, and performs control to supply the hydrocarbon-based fuel to the combustion chamber 12a by the second fuel supply unit 8 without supplying the alcohol-based fuel by the first fuel supply unit 7.

In the case of the mixed combustion mode, the control unit 10 performs control to supply both of the alcohol-based fuel and the hydrocarbon-based fuel to the combustion chamber 12a by the first fuel supply unit 7 and the second fuel supply unit 8. At this time, the injection amount of the alcohol-based fuel and the injection amount of the hydrocarbon-based fuel are controlled so as to satisfy a set supply ratio set as the supply ratio of the alcohol-based fuel to the hydrocarbon-based fuel.

Specifically, when the mixed combustion mode is the 40% mode, the control unit 10 controls the first fuel supply unit 7 and the second fuel supply unit 8 such that the injection amount of the alcohol-based fuel with respect to the total amount of the alcohol-based fuel and the hydrocarbon-based fuel becomes 40%, to thereby control the supply ratio of the alcohol-based fuel to the hydrocarbon-based fuel to 40%. Further, when the mixed combustion mode is the 50% mode, the control unit 10 controls the first fuel supply unit 7 and the second fuel supply unit 8 such that the injection amount of the alcohol-based fuel with respect to the total amount of the alcohol-based fuel and the hydrocarbon-based fuel becomes 50%, to thereby control the supply ratio of the alcohol-based fuel to the hydrocarbon-based fuel to 50%. Further, when the mixed combustion mode is the 60% mode, the control unit 10 controls the first fuel supply unit 7 and the second fuel supply unit 8 such that the injection amount of the alcohol-based fuel with respect to the total amount of the alcohol-based fuel and the hydrocarbon-based fuel becomes 60%, to thereby control the supply ratio of the alcohol-based fuel to the hydrocarbon-based fuel to 60%. It is to be noted that, even when the gas mode (the supply ratio of the alcohol-based fuel is 100%) is not performed, the maximum mixed combustion ratio of the target engine system 1 (for example, the supply ratio of the alcohol-based fuel of 80%) may be treated as the gas mode.

Further, control of adjusting the intake air temperature of the intake air in the engine system 1 will be described.

In the case of the mixed combustion mode, the control unit 10 controls the heat exchanging unit 6 to adjust the intake air temperature based on a supply ratio or a mixed combustion ratio of the alcohol-based fuel and the hydrocarbon-based fuel. In other words, the heat exchanging unit 6 is configured to be capable of adjusting the intake air temperature based on the supply ratio or the mixed combustion ratio of two or more types of fuel.

Specifically, the control unit 10 controls the medium flow rate adjusting unit 6b of the heat exchanging unit 6 to adjust the medium flow rate of the heat exchange medium, thereby controlling the degree of heat exchange between the intake air and the heat exchange medium to adjust the intake air temperature of the intake air.

For example, the control unit 10 controls the medium flow rate adjusting unit 6b such that a medium flow rate of the heat exchange medium in a case in which the supply ratio or the mixed combustion ratio of the alcohol-based fuel to the hydrocarbon-based fuel is a predetermined threshold value or more becomes smaller than a medium flow rate of the heat exchange medium in a case in which the supply ratio or the mixed combustion ratio is less than the predetermined threshold value, to thereby adjust the medium flow rate of the heat exchange medium. In other words, the control unit 10 controls the medium flow rate adjusting unit 6b such that the medium flow rate of the heat exchange medium becomes smaller as the supply ratio or the mixed combustion ratio of the alcohol-based fuel to the hydrocarbon-based fuel becomes larger. That is, when the heat exchanging unit 6 is an intercooler, the control unit 10 controls the heat exchanging unit 6 such that the intake air temperature becomes higher as the supply ratio or the mixed combustion ratio of the alcohol-based fuel to the hydrocarbon-based fuel becomes larger.

Further, in the engine system 1, for the intake air temperature at which the alcohol-based fuel is efficiently gasified (promoted gasification) in the mixed combustion mode, a correspondence between each supply ratio or each mixed combustion ratio of the alcohol-based fuel and the intake air temperature (target intake air temperature) at which efficient gasification is achieved at the supply ratio or the mixed combustion ratio is stored in advance by means of a map or an expression. Then, the control unit 10 acquires the intake air temperature (current intake air temperature) of the intake air flowing through the intake passage 3 by the intake air temperature acquiring unit 3a, and controls the heat exchanging unit 6 to adjust the intake air temperature of the intake air flowing through the intake passage 3 such that, based on the correspondence between the acquired current intake air temperature and the supply ratio (the set supply ratio) or the mixed combustion ratio of the alcohol-based fuel set in the mixed combustion mode, the acquired current intake air temperature becomes the target intake air temperature corresponding to the set supply ratio or the mixed combustion ratio.

Further, control of the supply ratio of the alcohol-based fuel and the hydrocarbon-based fuel in the engine system 1 will be described.

The control unit 10 controls the supply ratio of the alcohol-based fuel to the hydrocarbon-based fuel based on the injection pressure of the alcohol-based fuel injected by the first fuel supply unit 7, which has been acquired by the injection pressure acquiring unit 7a.

Specifically, in the engine system 1, the supply ratio (the set supply ratio) of the alcohol-based fuel is set to 100% in the gas mode. Further, the supply ratio (the set supply ratio) of the alcohol-based fuel is set in the mixed combustion mode. The control unit 10 controls the injection amount of the alcohol-based fuel by the first fuel supply unit 7 and the injection amount of the hydrocarbon-based fuel by the second fuel supply unit 8 based on the set supply ratio of the alcohol-based fuel. Here, the injection pressure of the alcohol-based fuel injected by the first fuel supply unit 7 conforms to the supply pressure in the first fuel supply path for supplying the alcohol-based fuel from the first fuel tank 22, and the control unit 10 sets the injection amount of the alcohol-based fuel injected by the first fuel supply unit 7 to an injection amount (set injection amount) corresponding to the set supply ratio of the alcohol-based fuel, based on the fact that the injection pressure of the alcohol-based fuel is a predetermined planned injection pressure.

However, the actual injection pressure (current injection pressure) of the alcohol-based fuel injected from the first fuel supply unit 7 may be unintentionally different from the planned injection pressure. In view of the above, the control unit 10 calculates, based on the injection pressure (the current injection pressure) of the alcohol-based fuel injected by the first fuel supply unit 7, which has been acquired by the injection pressure acquiring unit 7a, an injection amount of the alcohol-based fuel that allows the alcohol-based fuel injected from the first fuel supply unit 7 at the current injection pressure to be efficiently gasified, and controls the supply ratio of the alcohol-based fuel to the hydrocarbon-based fuel to achieve the injection amount. At this time, the control unit 10 stores in advance a correspondence among the intake air temperature of the intake passage 3, the injection pressure of the alcohol-based fuel, and the injection amount (the supply ratio) of the alcohol-based fuel in a case in which the alcohol-based fuel can be efficiently gasified by means of a map or an expression, and acquires the injection amount (the supply ratio) of the alcohol-based fuel based on the correspondence, for the current intake air temperature of the intake passage 3 and the current injection pressure of the alcohol-based fuel.

Alternatively, instead of the control of the supply ratio of the alcohol-based fuel, the control unit 10 may store in advance a correspondence among the intake air temperature of the intake passage 3, the injection pressure of the alcohol-based fuel, and the injection amount (the supply ratio) of the alcohol-based fuel in a case in which the alcohol-based fuel can be efficiently gasified by means of a map or an expression, acquire the target intake air temperature of the intake passage 3 based on the correspondence, for the current injection pressure and the current injection amount of the alcohol-based fuel, and control the heat exchanging unit 6 to adjust the intake air temperature of the intake air flowing through the intake passage 3 such that the intake air temperature of the intake passage 3 becomes the target intake air temperature.

As described above, according to the present embodiment, the engine system 1 is an engine system 1 that operates by combusting at least one of two or more types of fuel, and includes an intake air temperature adjusting unit capable of adjusting an intake air temperature of the intake passage 3 based on a supply ratio of the two or more types of fuel. In the engine system 1, the two or more types of fuel include alcohol-based fuel such as methanol and hydrocarbon-based fuel such as diesel fuel.

In this manner, the engine system 1 adjusts the intake air temperature of the intake passage 3 such that the supplied fuel has an appropriate temperature based on the supply ratio of the two or more types of fuel at the time of supplying at least one of two or more types of fuel having different combustion characteristics to the engine 2. Thus, it is possible to improve the combustion efficiency of the engine 2 by the fuel that is gasified appropriately.

Further, according to the present embodiment, the engine system 1 includes, as the intake air temperature adjusting unit, the heat exchanging unit 6 that adjusts the intake air temperature of the intake air by heat exchange between the intake air and the heat exchange medium. The heat exchanging unit 6 includes the medium flow rate adjusting unit 6b that adjusts the medium flow rate of the heat exchange medium and adjusts the intake air temperature by control of the medium flow rate adjusting unit 6b. Specifically, the medium flow rate adjusting unit 6b adjusts a medium flow rate in a case in which the supply ratio of the alcohol-based fuel is a predetermined threshold value or more to be smaller than a medium flow rate in a case in which the supply ratio of the alcohol-based fuel is less than the threshold value.

In this manner, the engine system 1 can use the heat exchanging unit 6 to adjust the intake air temperature by adjusting the medium flow rate of the heat exchange medium.

Further, according to the present embodiment, the engine system 1 includes the intake air temperature acquiring unit 3a that acquires the intake air temperature of the intake passage 3. The intake air temperature adjusting unit such as the heat exchanging unit 6 adjusts the intake air temperature based on the current intake air temperature acquired by the intake air temperature acquiring unit 3a and the target intake air temperature corresponding to the supply ratio of the alcohol-based fuel. This intake air temperature acquiring unit 3a is positioned on the downstream side of the heat exchanging unit 6.

In this manner, in the engine system 1, the current intake air temperature of the intake passage 3 can be fed back to adjust the intake air temperature with high accuracy with respect to the supply ratio of the alcohol-based fuel. At this time, the engine system 1 can acquire the current intake air temperature by the intake air temperature acquiring unit 3a at an optimal position in the intake passage 3.

Further, according to the present embodiment, the engine system 1 includes the first fuel supply unit 7 that is a fuel injection valve that injects the alcohol-based fuel, and the injection pressure acquiring unit 7a that acquires the injection pressure of the alcohol-based fuel injected by the first fuel supply unit 7. The intake air temperature adjusting unit controls the supply ratio of the alcohol-based fuel or the intake air temperature of the intake passage 3 based on the injection pressure of the alcohol-based fuel acquired by the injection pressure acquiring unit 7a.

In the engine system 1, the control unit 10 cannot control the injection pressure of the alcohol-based fuel conforming to the supply pressure from the first fuel tank 22 to the first fuel supply unit 7, and hence the current injection pressure of the alcohol-based fuel may be unintentionally different from the planned injection pressure. Even in such a case, in the engine system 1, the supply ratio of the alcohol-based fuel or the intake air temperature of the intake passage 3 is controlled based on the current injection pressure of the alcohol-based fuel, and thus the alcohol-based fuel can be appropriately gasified to improve the combustion efficiency of the engine 2.

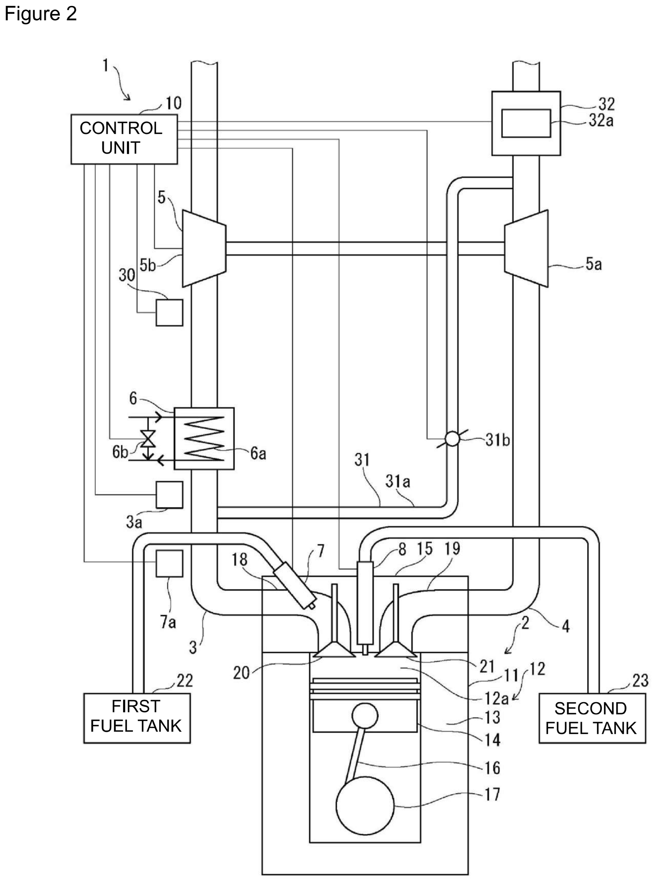

Further, in a first modification example of the present embodiment, as illustrated in FIG. 2, the engine system 1 includes an intake air parameter acquiring unit 30, an intake air release unit 31, and an exhaust gas purifying unit 32.

The intake air parameter acquiring unit 30 acquires an intake air parameter such as an intake air flow rate or an intake air pressure related to the intake air of the intake passage 3 on the upstream side or the downstream side from the heat exchanging unit 6 in the intake direction. For example, the intake air parameter acquiring unit 30 includes a flow rate sensor that detects and acquires the intake air flow rate or a pressure sensor that detects and acquires the intake air pressure.

The intake air release unit 31 releases the intake air from the intake passage 3 through which the intake air is caused to flow to adjust the mixture, and adjusts the intake air amount optimal for combustion based on the adjusted intake air temperature.

For example, the intake air release unit 31 includes a release passage 31a for releasing the intake air from the intake passage 3, and a release amount adjusting unit 31b that adjusts the release amount of the intake air in the release passage 31a. The intake air release unit 31 is configured to release the intake air to the exhaust passage 4 from the intake passage 3 by the release passage 31a bypassed from the intake passage 3 to the exhaust passage 4.

The intake air release unit 31 is connected to the intake passage 3 on the downstream side from the heat exchanging unit 6 in the intake direction. FIG. 2 illustrates an example in which the intake air release unit 31 is connected to the exhaust passage 4 on the downstream side from the supercharger 5 in the exhaust direction, but alternatively, the intake air release unit 31 may be connected to the exhaust passage 4 on the upstream side from the supercharger 5 or may be opened to the atmosphere.

The exhaust gas purifying unit 32 includes an exhaust gas purification catalyst 32a, and purifies exhaust gas flowing through the exhaust passage 4 by promoting a reduction reaction for selectively reducing nitrogen oxides included in the exhaust gas to nitrogen and water. The exhaust gas purifying unit 32 is provided in the exhaust passage 4 on the downstream side from the supercharger 5 in the exhaust direction. The exhaust gas purifying unit 32 is configured to be capable of operating in a regeneration mode of regenerating the exhaust gas purification catalyst 32a.

In the first modification example, the engine system 1 causes the control unit 10 to adjust the intake air release amount to be released by the intake air release unit 31 based on the intake air parameter acquired by the intake air parameter acquiring unit 30, to thereby adjust the mixture.

In the engine system 1, the alcohol-based fuel such as methanol is suitable for combustion in a smaller amount of intake air as compared with the hydrocarbon-based fuel such as diesel fuel. Accordingly, combustion with the same amount of intake air as the hydrocarbon-based fuel leads to misfires and increase in unburned fuel. In view of the above, in the engine system 1, when there is a possibility of misfires and increase in unburned fuel based on the intake air parameter, the intake air release amount to be released by the intake air release unit 31 is increased to increase the ratio of the alcohol-based fuel to the intake air. Thus, the combustion efficiency of the engine 2 can be improved.

Further, in the engine system 1, when the exhaust gas purifying unit 32 operates in the regeneration mode of regenerating the exhaust gas purification catalyst 32a, the control unit 10 controls the release amount adjusting unit 31b of the intake air release unit 31 to adjust the release amount of the intake air from the intake passage 3.

In the engine system 1, for the mixture of the alcohol-based fuel and the intake air supplied to the engine 2, the intake air can be increased to reduce the ratio of the alcohol-based fuel to the intake air, and thus the unburned fuel can be increased. This unburned fuel can be used as a heat source at the time of the regeneration mode of regenerating the exhaust gas purification catalyst by heat. That is, in the engine system 1, with the intake air release amount to be released by the intake air release unit 31 being reduced at the time of regenerating the exhaust gas purification catalyst 32a, the unburned alcohol of the alcohol-based fuel can be increased, and thus the exhaust gas purification catalyst 32a can be efficiently regenerated.

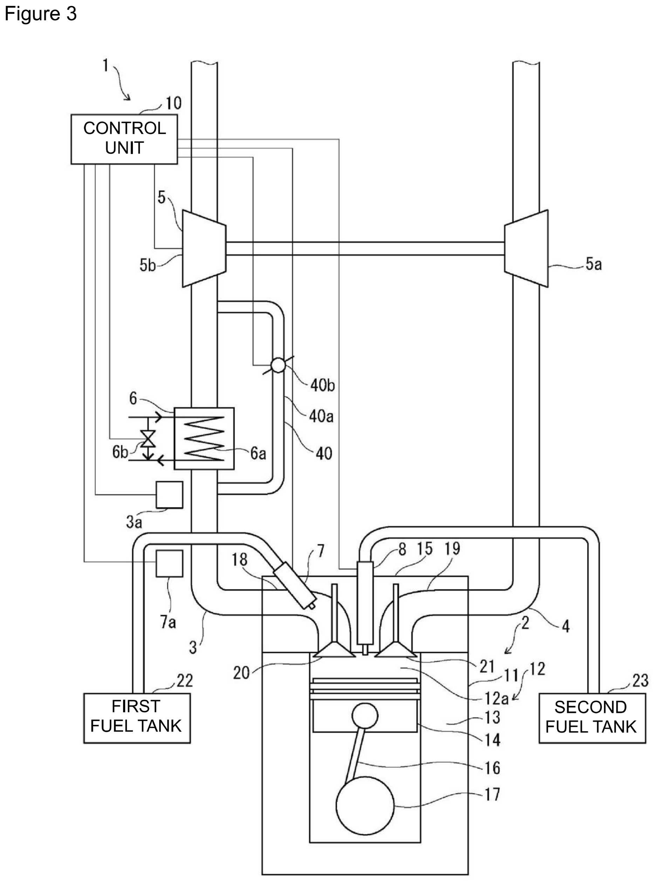

Further, in a second modification example of the present embodiment, as illustrated in FIG. 3, the engine system 1 includes a bypass unit 40.

The bypass unit 40 functions as the intake air temperature adjusting unit that adjusts the intake air temperature of the intake air of the intake passage 3 by causing the intake air to bypass the heat exchanging unit 6 in the intake passage 3. The bypass unit 40 is bypassed between the upstream side and the downstream side of the heat exchanging unit 6 in the intake direction. The bypass unit 40 includes a bypass passage 40a through which the intake air is caused to flow while bypassing the heat exchanging unit 6, and a bypass amount adjusting unit 40b that adjusts the bypass amount of the intake air in the bypass passage 40a.

In the second modification example, the engine system 1 causes the control unit 10 to adjust the bypass amount to be bypassed by the bypass unit 40, and to control the amount of intake air to be subjected to heat exchange by the heat exchanging unit 6, to thereby adjust the intake air temperature of the intake air of the intake passage 3. For example, when the heat exchanging unit 6 is an intercooler, the control unit 10 increases the bypass amount of the intake air of the bypass unit 40 to reduce the amount of intake air to be cooled by the heat exchanging unit 6, to thereby increase the intake air temperature of the intake air.

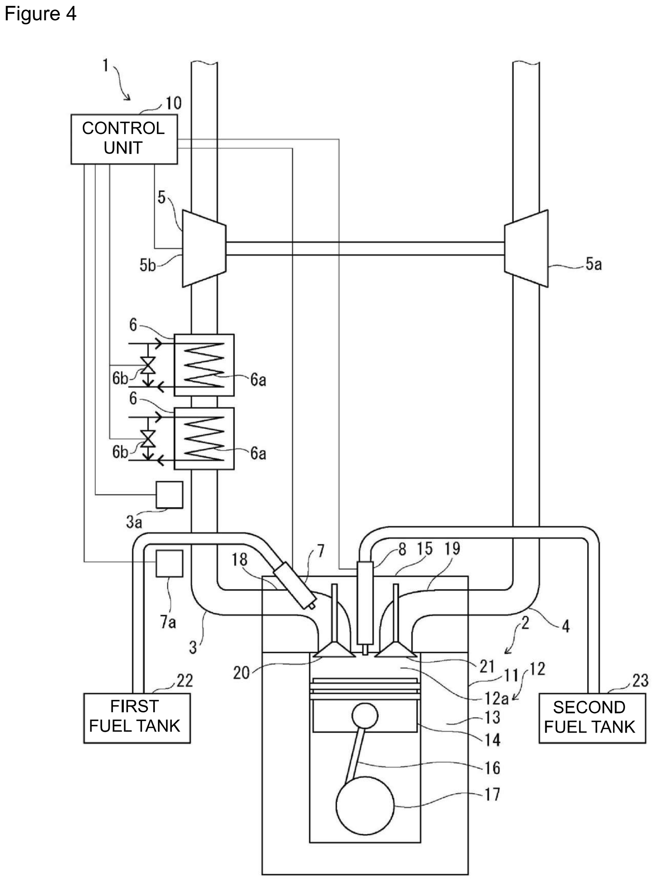

Further, in a third modification example of the present embodiment, as illustrated in FIG. 4, in the engine system 1, the heat exchanging unit 6 includes two or more heat exchange medium passages 6a through each of which the heat exchange medium flows, and includes two or more medium flow rate adjusting units 6b that respectively adjust the medium flow rates of the heat exchange media in the two or more heat exchange medium passages 6a. In other words, the heat exchanging unit 6 includes two or more heat exchangers each including the heat exchange medium passage 6a and the medium flow rate adjusting unit 6b.

With the third modification example, the heat exchanging unit 6 performs heat exchange of the intake air by a plurality of heat exchangers. Thus, the intake air temperature of the intake air can be efficiently adjusted.

It is to be noted that, in the above-mentioned embodiment, description has been given of an example in which, in the engine system 1, the control unit 10 controls the heat exchanging unit 6 to adjust the intake air temperature based on the supply ratio of the alcohol-based fuel and the hydrocarbon-based fuel, but the present invention is not limited to this example. In another example, the engine system 1 may be able to set a plurality of stages of mixed combustion modes respectively corresponding to a plurality of stages of supply ratios (for example, supply ratios of every 10%), and the control unit 10 may control the heat exchanging unit 6 to adjust the intake air temperature based on the stage of the mixed combustion mode.

Further, in the above-mentioned embodiment, description has been given of an example in which, in the engine system 1, as the intake air temperature adjusting unit, the heat exchanging unit 6 or the bypass unit 40 is used. Here, the engine system 1 may use any one of the heat exchanging unit 6 and the bypass unit 40 as the intake air temperature adjusting unit, or use two or more of the heat exchanging unit 6 and the bypass unit 40 in combination as the intake air temperature adjusting unit. Moreover, the engine system 1 may select one or more of the heat exchanging unit 6 and the bypass unit 40 in accordance with parameters such as the supply ratio of the alcohol-based fuel to the hydrocarbon-based fuel, the stage of the mixed combustion mode, and the current intake air temperature of the intake passage 3, and use the selected unit as the intake air temperature adjusting unit.

It is to be noted that the present invention can be changed as appropriate without departing from the gist or idea of the present invention that can be read from the scope of claims and the entire specification, and the engine system accompanying such changes is also included in the technical idea of the present invention.

### [Clauses]

The followings are Clauses regarding the summary of the invention extracted from the above-mentioned embodiment. It is to be noted that the configurations and processing functions described in the following Clauses can be selected and combined as appropriate.

### <Clause 1>

An engine system that operates by combusting at least one of two or more types of fuel, the engine system including
an intake air temperature adjusting unit capable of adjusting an intake air temperature of intake air based on a supply ratio of the two or more types of fuel.

### <Clause 2>

The engine system according to Clause 1, in which the two or more types of fuel include alcohol-based fuel.

### <Clause 3>

The engine system according to Clause 1 or 2, in which:
the intake air temperature adjusting unit includes a heat exchanging unit that adjusts the intake air temperature by heat exchange between the intake air and a heat exchange medium; and
the heat exchanging unit includes a medium flow rate adjusting unit that adjusts a medium flow rate of the heat exchange medium and adjusts the intake air temperature by control of the medium flow rate adjusting unit.

### <Clause 4>

The engine system according to Clause 3, in which:
the two or more types of fuel include alcohol-based fuel; and
the medium flow rate adjusting unit adjusts the medium flow rate in a case in which the supply ratio of the alcohol-based fuel is a predetermined threshold value or more to be smaller than the medium flow rate in a case in which the supply ratio of the alcohol-based fuel is less than the threshold value.

### <Clause 5>

The engine system according to any one of Clauses 1 to 4, in which:
the intake air temperature adjusting unit includes a heat exchanging unit that adjusts the intake air temperature by heat exchange between the intake air and a heat exchange medium;
the engine system further includes an intake air parameter acquiring unit that acquires an intake air parameter related to the intake air on an upstream side or a downstream side of the heat exchanging unit;
the engine system further includes an intake air release unit that releases the intake air from an intake passage through which the intake air is caused to flow; and
an intake air release amount to be released by the intake air release unit is adjusted based on the intake air parameter acquired by the intake air parameter acquiring unit.

### <Clause 6>

The engine system according to Clause 5, further including an exhaust gas purification catalyst,
in which the intake air temperature adjusting unit adjusts the intake air release amount at the time of regenerating the exhaust gas purification catalyst.

### <Clause 7>

The engine system according to any one of Clauses 1 to 6, further including an intake air temperature acquiring unit that acquires the intake air temperature,
in which the intake air temperature adjusting unit adjusts the intake air temperature based on a current intake air temperature acquired by the intake air temperature acquiring unit and a target intake air temperature corresponding to the supply ratio.

### <Clause 8>

The engine system according to Clause 7, in which:
the intake air temperature adjusting unit includes a heat exchanging unit that adjusts the intake air temperature by heat exchange between the intake air and a heat exchange medium; and
the intake air temperature acquiring unit is positioned on a downstream side of the heat exchanging unit.

### <Clause 9>

The engine system according to any one of Clauses 1 to 8, further including a heat exchanging unit that adjusts the intake air temperature by heat exchange between the intake air and a heat exchange medium, in which:
the intake air temperature adjusting unit further includes a bypass unit that allows the intake air to bypass the heat exchanging unit; and
the bypass unit includes a bypass flow rate adjusting unit that adjusts a bypass flow rate of the intake air to be bypassed to adjust the bypass flow rate based on the supply ratio.

### <Clause 10>

The engine system according to any one of Clauses 1 to 9, further including a heat exchanging unit that adjusts the intake air temperature by heat exchange between the intake air and a heat exchange medium,
in which the heat exchanging unit includes two or more heat exchange medium passages through each of which the heat exchange medium flows.

### <Clause 11>

The engine system according to any one of Clauses 2 to 10, further including:
a fuel injection valve that injects the alcohol-based fuel; and
   an injection pressure acquiring unit that acquires an injection pressure of the alcohol-based fuel injected by the fuel injection valve,
in which the intake air temperature adjusting unit controls the supply ratio or the intake air temperature based on the injection pressure acquired by the injection pressure acquiring unit.

### REFERENCE SIGNS LIST

- 1: engine system
- 2: engine
- 3: intake passage
- 3a: intake air temperature acquiring unit
- 4: exhaust passage
- 5: supercharger
- 5a: turbine
- 5b: compressor
- 6: heat exchanging unit
- 6a: heat exchange medium passage
- 6b: medium flow rate adjusting unit
- 7: first fuel supply unit
- 7a: injection pressure acquiring unit
- 8: second fuel supply unit
- 10: control unit
- 11: cylinder block
- 12: cylinder unit
- 12a: combustion chamber
- 13: cylinder
- 14: piston
- 15: cylinder head
- 16: connecting rod
- 17: crankshaft
- 18: intake port
- 19: exhaust port
- 20: intake valve
- 21: exhaust valve
- 22: first fuel tank
- 23: second fuel tank
- 30: intake air parameter acquiring unit
- 31: intake air release unit
- 31a: release passage
- 31b: release amount adjusting unit
- 32: exhaust gas purifying unit
- 32a: exhaust gas purification catalyst
- 40: bypass unit
- 40a: bypass passage
- 40b: bypass amount adjusting unit

## Claims

1. An engine system that operates by combusting at least one of two or more types of fuel, the engine system comprising
an intake air temperature adjusting unit capable of adjusting an intake air temperature of intake air based on a supply ratio of the two or more types of fuel.

2. The engine system according to claim 1, wherein the two or more types of fuel include alcohol-based fuel.

3. The engine system according to claim 1, wherein:
the intake air temperature adjusting unit includes a heat exchanging unit that adjusts the intake air temperature by heat exchange between the intake air and a heat exchange medium; and
the heat exchanging unit includes a medium flow rate adjusting unit that adjusts a medium flow rate of the heat exchange medium and adjusts the intake air temperature by control of the medium flow rate adjusting unit.

4. The engine system according to claim 3, wherein:
the two or more types of fuel include alcohol-based fuel; and
the medium flow rate adjusting unit adjusts the medium flow rate in a case in which the supply ratio of the alcohol-based fuel is a predetermined threshold value or more to be smaller than the medium flow rate in a case in which the supply ratio of the alcohol-based fuel is less than the threshold value.

5. The engine system according to claim 1, wherein:
the intake air temperature adjusting unit includes a heat exchanging unit that adjusts the intake air temperature by heat exchange between the intake air and a heat exchange medium;
the engine system further comprises an intake air parameter acquiring unit that acquires an intake air parameter related to the intake air on an upstream side or a downstream side of the heat exchanging unit;
the engine system further comprises an intake air release unit that releases the intake air from an intake passage through which the intake air is caused to flow; and
an intake air release amount to be released by the intake air release unit is adjusted based on the intake air parameter acquired by the intake air parameter acquiring unit.

6. The engine system according to claim 5, further comprising an exhaust gas purification catalyst,
wherein the intake air temperature adjusting unit adjusts the intake air release amount at the time of regenerating the exhaust gas purification catalyst.

7. The engine system according to claim 1, further comprising an intake air temperature acquiring unit that acquires the intake air temperature,
wherein the intake air temperature adjusting unit adjusts the intake air temperature based on a current intake air temperature acquired by the intake air temperature acquiring unit and a target intake air temperature corresponding to the supply ratio.

8. The engine system according to claim 7, wherein:
the intake air temperature adjusting unit includes a heat exchanging unit that adjusts the intake air temperature by heat exchange between the intake air and a heat exchange medium; and
the intake air temperature acquiring unit is positioned on a downstream side of the heat exchanging unit.

9. The engine system according to claim 1, further comprising a heat exchanging unit that adjusts the intake air temperature by heat exchange between the intake air and a heat exchange medium, wherein:
the intake air temperature adjusting unit further includes a bypass unit that allows the intake air to bypass the heat exchanging unit; and
the bypass unit includes a bypass flow rate adjusting unit that adjusts a bypass flow rate of the intake air to be bypassed to adjust the bypass flow rate based on the supply ratio.

10. The engine system according to claim 1, further comprising a heat exchanging unit that adjusts the intake air temperature by heat exchange between the intake air and a heat exchange medium,
wherein the heat exchanging unit includes two or more heat exchange medium passages through each of which the heat exchange medium flows.

11. The engine system according to claim 2, further comprising:
a fuel injection valve that injects the alcohol-based fuel; and
an injection pressure acquiring unit that acquires an injection pressure of the alcohol-based fuel injected by the fuel injection valve,
wherein the intake air temperature adjusting unit controls the supply ratio or the intake air temperature based on the injection pressure acquired by the injection pressure acquiring unit.
